# EUROPEAN PATENT SPECIFICATION

(11) **EP 1 851 614 B1**
(45) Date of publication and mention of the grant of the patent: **12.01.2011**
(21) Application number: 06727613.9
(22) Date of filing: 08.02.2006
(51) Int. Cl.: G06F 5/10

(54) **LOW-POWER REGISTER ARRAY FOR FAST SHIFT OPERATIONS**
REGISTERANORDNUNG MIT NIEDRIGEM STROMVERBRAUCH FÜR SCHNELLE SCHIEBEOPERATIONEN
RESEAU DE REGISTRES BASSE PUISSANCE POUR CALCULS DE DECALAGES RAPIDES

(30) Priority: 08.02.2005 US 651434 P
(43) Date of publication of application: 07.11.2007
(73) Proprietor: NXP B.V., 5656 AG Eindhoven (NL)
(72) Inventor: BI, Lei, NL-5621 BA Eindhoven (NL); PU, Tianyan, NL-5621 BA Eindhoven (NL)
(74) Representative: Schouten, Marcus Maria
(86) International application number: PCT/IB2006/050415
(87) International publication number: WO 2006/085273

(56) References cited:
- EP-A- 1 293 888
- US-A- 4 803 654
- US-A- 5 504 913

## Description

The present invention relates to the general field of shift registers that aid in performing fast calculations based on shifting contents among registers. These types of shift registers are especially useful in signal processor applications.

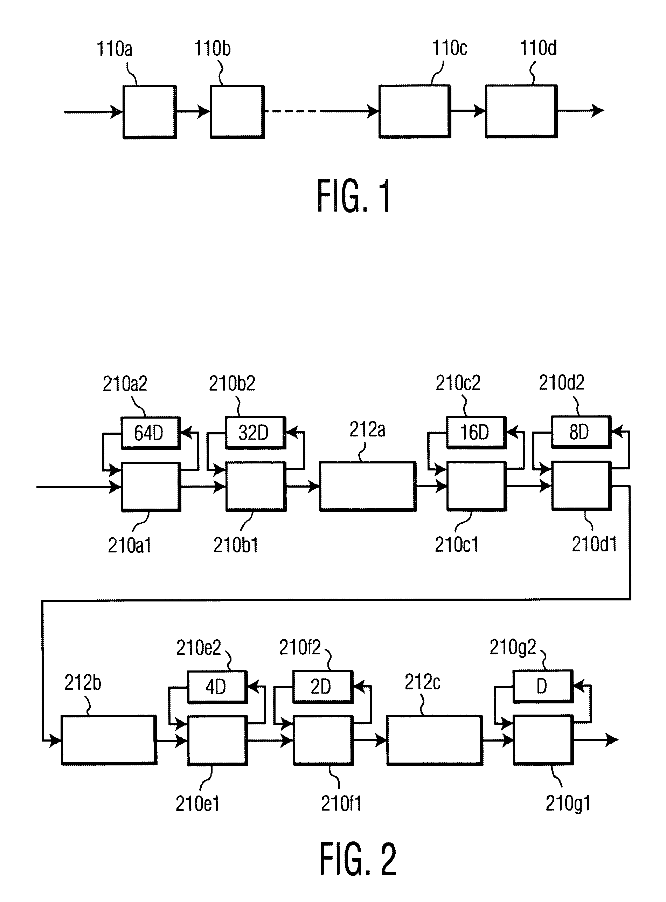

Shift register arrays are widely used in many signal processing applications such as Finite Impulse Response (FIR) filters and Pipeline Fast Fourier Transforms (FFT) and its inverse Fast Fourier Transforms (IFFT). Figure 1 depicts a conventional shift register array with N registers 110a-110d, which are linked together in a chain with the output of one register coupled to the input of the next.

Since there is no combinational circuit logic between registers, the shift register array can run at a high speed in conventional integrated circuit designs, for example, a Very Large Scale Integrated Circuit (VLSI) implementation. However, since N shifts are required for the input data to reach the output for each cycle in the shift register array, dynamic power consumption is correlates directly to the number N. Consequently, when N is a large number, the power consumption is also large.

Figure 2 depicts a conventional 128-point Fast Fourier Transform/Inverse Fast Fourier Transform (FFT/IFFT) design with R22SDF architecture (Radix-22 Single-path Delay Feedback). In Figure 2, BUF1 210a1 stands for a butterfly unit with data swapping and data negating. BUF2 210b1 stands for a normal butterfly unit. Above each butterfly unit, there is a storage element array, for example 210a2 and 210b2. In a high-speed FFT/IFFT design, the storage element is normally implemented as a register array to improve the throughput. A conventional implementation of such a register array is the shift register array depicted in Figure 1. In this exemplary case, 127 register shifts are implemented for each cycle. Such a large number of shift operations will dissipate a large amount of dynamic power.

Engineers are keenly aware that power consumption is an important concern in modem VLSI design, which is especially true for integrated circuits used in mobile or portable devices. A low-power design is strongly desirable since these devices are powered by a battery. In such cases, it is justified to trade reasonable hardware cost for lower power consumption. Consequently, the invention is directed to reduce the power consumption in the shift-register array using a low-power register array. The invention provides a Random Access Memory (RAM) technique that leads to low-power dissipation. Since the invention is constructed of registers, the invention can also achieve high throughput.

US 2003/0052708 discloses a high speed FIFO having parallel registers.

The invention provides a data register as claimed in claim 1 and a method as claimed in claim 3.

The invention provides a low-power register array for fast shift calculations. In the exemplary embodiments, a low-power RAM-like register array is utilized to provide the shift operations. The RAM-like register is similar to the shift register array and it can achieve a high throughput required by some applications such as fast FIR and high-speed FFT. However, the invention consumes much less dynamic power than a shift register array as it works like a RAM. Several exemplary architectures for the low-power RAM-like register array are provided.

In the exemplary embodiment, a data register for use in a computer comprises a clock terminal configured to receive a clock signal. A plurality of registers are configured to selectively store data. A data input circuit is coupled to the registers and configured to receive input data and selectively deliver the input data to the registers. A data output circuit is coupled to the data registers and configured to selectively output the output data. A selector is coupled to the data input circuit and the data output circuit, and configured to permit the input data to enter selected registers through the data input circuit and permit selected registers to output data through the data output circuit.

The invention provides an efficient technique for loading the shift registers without a large number of simultaneous serial shifts. The result is a power-efficient device that achieves high performance objectives while minimizing power consumption.

The invention is described with reference to the following figures.
Figure 1 depicts a conventional shift register array;
Figure 2 depicts a conventional 128-point R2²SDF FFT/IFFT architecture;
Figure 3 depicts a low-power data register architecture ;
Figure 4 depicts a low-power data register architecture with a demultiplexer, a multiplexer and an address register ;
Figure 5 depicts a low-power data register architecture with chip enabled registers and an address/enable generator according to an embodiment of the invention; and
Figure 6 depicts a low-power data register architecture with clock gating and an address/enable generator .

The invention is described with reference to specific apparatus and embodiments. Those skilled in the art will recognize that the description is for illustration and to provide the best mode of practicing the invention.

One exemplary concept of the invention is that a low-power RAM-like register array can be constructed so that only one data is input to the array and one data is output from the array at any given time. Therefore, the N data shifts may be avoided by delivering the input data to a register, whose content will be the output at current clock cycle. Thus, only one register is toggled instead of N registers. This concept helps to significantly reduce power consumption while still providing a fast throughput.

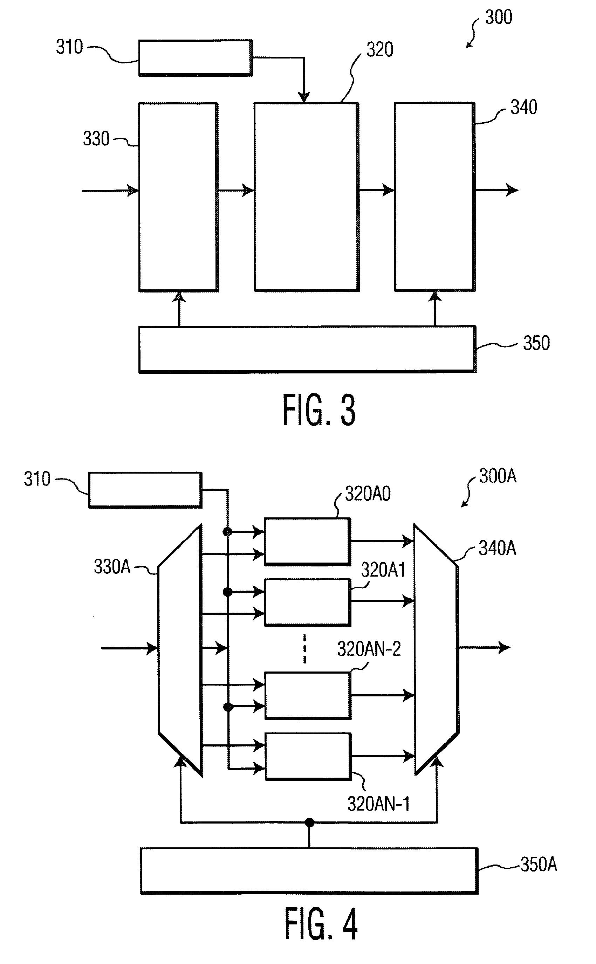

Figure 3 depicts a low-power data register architecture 300. A clock input 310 is provided to the registers 320 to clock synchronize the data input to the registers and output from the registers. A data input circuit 330 is coupled to the registers 320 and configured to receive input data and selectively deliver the input data to the registers. A data output circuit 340 is coupled to the data registers 320 and configured to selectively output the output data. A selector 350 is coupled to the data input circuit 330 and the data output circuit 340, and configured to permit the input data to enter selected registers through the data input circuit and permit selected registers to output data through the data output circuit.

The data input circuit 330 can be constructed in a number of different ways, which are demonstrated below in additional figures. Likewise, while the data output circuit 340 is shown as a multiplexer in all the figures below, there are similar modifications that can be made to that circuit.

Figure 4 depicts a low-power data register architecture 300A with a demultiplexer 330A and a multiplexer 340A and an address register 350A. The register block 320 is constructed by using a plurality of N registers 320A0 to 320AN-1. In one aspect, the address register 350A increments in an ascending order to load the registers in order through the demultiplexer 330A. Likewise, the address register 350A may also unload the registers in order through the multiplexer 340A.

The address generator 350A generates an address signal for the demultiplexer 330 so that the input data can be correctly passed to the register, whose content will be output at this cycle. The same address signal goes to the multiplexer 340 since the register accepting the input data will produce the output.

Compared to the shift register architecture in Figure 1, some extra hardware (i.e. a demultiplexer 330A, a multiplexer 340A and an Address Generator 350A) is employed in Figure 4. In one aspect, the address generator 350A is a counter that counts from 0 to N-1 for a N-register array. The hardware cost of 1:N demutiplexer 330A and N: 1 multiplexer 340A can be significant, but the overall power is reduced very significantly.

Additional embodiments are provided to demonstrate further reductions in hardware that can be implemented according to the invention.

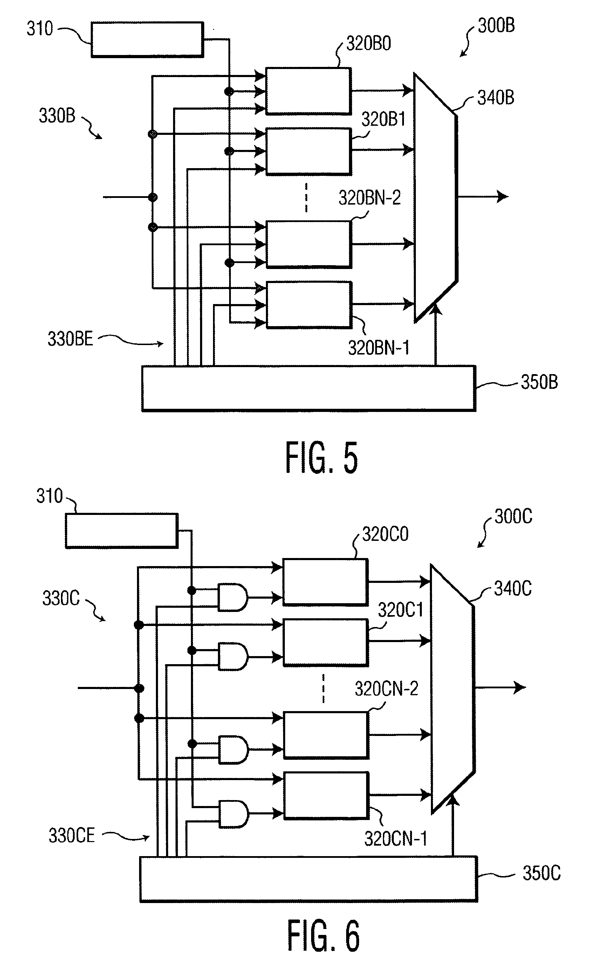

Figure 5 depicts a low-power data register architecture 300B with chip enabled registers 320A1 to 320AN-1 and an address/enable generator 350B according to an embodiment of the invention. The register block 320 is constructed by using a plurality of N registers 320B0 to 320BN-1, and these registers are chip enabled by the input from the address/enable generator 350B. Basically, a standard register is replaced with holdable registers 320B0 to 320BN-1 so that the data is only clocked into the register when the enable signal is active. The data input circuit 330 in this embodiment is labeled 330B and includes the chip enable signals 330BE that control the enablement of the registers 320B0 to 320BN-1. In one aspect, the address/enable generator 350B increments in an ascending order to load the registers in order through the data input circuit 330B. Likewise, the address register 350A may also unload the registers in order through the multiplexer 340B.

This embodiment eliminates the demultiplexer 330A in Figure 4. Since a holdable register is similar in silicon area as a standard register, the extra hardware is reduced nearly by half with the architecture in Figure 5 when it compares with the architecture in Figure 4.

Another way to achieve more power saving with a reasonable extra hardware is to use clock gating. Figure 6 depicts a low-power data register architecture 300C with clock gating 330C and an address/enable generator 350C . The register block 320 is constructed by using a plurality of N registers 320C0 to 320CN-1. In this aspect, since one register is toggled at each cycle, the other N-1 registers can be disabled with a clock gating scheme. The data input circuit 330 in this embodiment is labeled 330B and includes the enable signals 330CE that control the clock to the registers 320C0 to 320CN-1. The clock for each register is disabled when the corresponding enable signal is deactivated. The clock gating can be implemented by manual RTL coding or with aid of EDA tools like Synosys's power compiler. In one aspect, the address/enable generator 350C increments in an ascending order to load the registers in order through the data input circuit 330C. Likewise, the address register 350A may also unload the registers in order through the multiplexer 340B.

A comparison in term of hardware cost and power saving for the above three architectures are shown in Table 1.

**TABLE 1**

| Architecture | Dynamic power consumption | Silicon Area |
|---|---|---|
| Figure 4 with a demultiplexer and a multiplexer | Most | Most |
| Figure 5 with a multiplexer and holdable registers | Medium | Least |
| Figure 6 with clock gating | Least | Medium |

As shown in Table 1, the architectures depicted in Figures 5 and 6 are promising and can lead a low-power design with some moderate extra hardware.

Advantages of the invention are numerous. The invention provides an efficient technique for loading the shift registers without a large number of simultaneous serial shifts. The result is a power-efficient device that achieves high performance objectives while minimizing power consumption.

Having disclosed exemplary embodiments and the best mode, modifications and variations may be made to the disclosed embodiments while remaining within the scope of the invention as defined by the following claims.

## Claims

1. A data register (300) for use in a computer, comprising:
a clock terminal (310) configured to receive a clock signal;
a plurality of registers (320) configured to selectively store data;
a data input circuit (330) coupled to the registers and configured to receive input data and selectively deliver the input data to the registers;
a data output circuit (340) coupled to the data registers and configured to selectively output the output data; and a selector (350) coupled to the data input circuit and the data output circuit, and configured to permit the input data to enter selected registers through the data input circuit and permit selected registers to output data through the data output circuit,
**characterised in that** the data input circuit includes an enable input to the shift registers; the data output circuit includes a multiplexer; and the selector includes an address/enable generator.

2. The data register of claim 1, wherein: the selector is configured to sequentially select the plurality of registers for data input and data output.

3. A method of temporarily storing data using a data register (300) having a plurality of registers (320), a data input circuit (330), a data output circuit (340), and a selector (350) comprising the steps of:
generating an address/enable signal from the selector (350);
selectively delivering input data to the registers through the data input circuit by providing the enable signal of the selector to the registers; and
selectively outputting output data from the registers through a multiplexer by providing the address signal of the selector to the multiplexer.

4. The method of claim 3, wherein: the step of selectively delivering the input data to the registers is sequential.

5. The method of claim 3, wherein: the step of selectively outputting the output data from the registers is sequential.

## Patentansprüche

1. Datenregister (300) zur Verwendung in einem Computer, aufweisend:
einen Taktanschluss (310), der eingerichtet ist, um ein Taktsignal zu empfangen;
eine Mehrzahl von Registern (320), die eingerichtet sind, um selektiv Daten zu speichern;
einen Dateneingangsschaltkreis (330), der mit den Registern gekoppelt ist und eingerichtet ist, um Eingangsdaten zu empfangen und die Eingangsdaten selektiv an die Register zu liefern;
einen Datenausgangsschaltkreis (340), der mit den Datenregistern gekoppelt ist und eingerichtet ist, um die Ausgangsdaten selektiv auszugeben; und einen Selektor (350), der mit dem Dateneingangsschaltkreis und dem Datenausgangsschaltkreis gekoppelt ist und eingerichtet ist, um zu erlauben, dass die Eingangsdaten in ausgewählte Register durch den Dateneingangsschaltkreis eingegeben werden, und um zu erlauben, dass ausgewählte Register Daten durch den Datenausgangsschaltkreis ausgeben,
**dadurch gekennzeichnet, dass** der Dateneingangsschaltkreis einen Freigabeeingang zu den Schieberegistern aufweist; dass der Datenausgangsschaltkreis einen Multiplexer aufweist; und dass der Selektor einen Adress-/Freigabeerzeuger aufweist.

2. Datenregister gemäß Anspruch 1, wobei: der Selektor eingerichtet ist, um selektiv die Mehrzahl von Registern für Dateneingang und Datenausgang auszuwählen.

3. Verfahren zum temporären Speichern von Daten unter Verwendung eines Datenregisters (300), das eine Mehrzahl von Registern (320), einen Dateneingangsschaltkreis (330), einen Datenausgangsschaltkreis (340) und einen Selektor (350) aufweist, wobei das Verfahren die Schritte aufweist:
Erzeugen eines Adress-/Freigabesignals von dem Selektor (350);
selektives Liefern von Eingangsdaten an die Register durch den Dateneingangsschaltkreis, indem das Freigabesignal des Selektors an die Register bereitgestellt wird; und
selektives Ausgeben von Ausgangsdaten von den Registern durch einen Multiplexer, indem das Adresssignal des Selektors an den Multiplexer bereitgestellt wird.

4. Verfahren gemäß Anspruch 3, wobei: der Schritt des selektiven Lieferns der Eingangsdaten an die Register sequentiell ist.

5. Verfahren gemäß Anspruch 3, wobei: der Schritt des selektiven Ausgebens der Ausgangsdaten von den Registern sequentiell ist.

## Revendications

1. Registre de données (300) pour une utilisation dans un ordinateur, comprenant :
une borne d'horloge (310) configurée de manière à recevoir un signal d'horloge ;
une pluralité de registres (320) configurés de manière à stocker sélectivement des données ;
un circuit d'entrée de données (330) raccordé aux registres et configuré de manière à recevoir des données d'entrée et à fournir sélectivement les données d'entrée aux registres ;
un circuit de sortie de données (340) raccordé aux registres de données et configuré de manière à fournir sélectivement en sortie les données de sortie ; et un sélecteur (350) raccordé au circuit d'entrée de données et au circuit de sortie de données, et configuré de manière à permettre aux données d'entrée d'entrer dans des registres sélectionnés par l'intermédiaire du circuit d'entrée de données et à permettre aux registres sélectionnés de fournir en sortie des données par l'intermédiaire du circuit de sortie de données,
**caractérisé en ce que** le circuit d'entrée de données comporte une entrée d'autorisation vers les registres à décalage ; que le circuit de sortie de données comporte un multiplexeur ; et que le sélecteur comporte un générateur d'autorisation/adresse.

2. Registre de données selon la revendication 1, dans lequel le sélecteur est configuré de manière à sélectionner séquentiellement la pluralité de registres pour des entrées de données et des sorties de données.

3. Procédé de stockage temporaire de données utilisant un registre de données (300) ayant une pluralité de registres (320), un circuit d'entrée de données (330), un circuit de sortie de données (340), et un sélecteur (350), comportant les étapes suivantes :
génération d'un signal d'adresse / autorisation à partir du sélecteur (350) ;
fourniture sélective des données d'entrée aux registres par l'intermédiaire du circuit d'entrée de données grâce à la fourniture du signal d'autorisation du sélecteur aux registres ; et
fourniture sélective en sortie des données de sortie à partir des registres par l'intermédiaire d'un multiplexeur grâce à la fourniture du signal d'adresse du sélecteur au multiplexeur.

4. Procédé selon la revendication 3, dans lequel l'étape de fourniture sélective des données d'entrée aux registres est séquentielle.

5. Procédé selon la revendication 3, dans lequel l'étape de fourniture sélective en sortie des données de sortie à partir des registres est séquentielle.
